# EUROPEAN PATENT SPECIFICATION

(11) **EP 2 119 623 B1**
(45) Date of publication and mention of the grant of the patent: **18.07.2012**
(21) Application number: 09006362.9
(22) Date of filing: 12.05.2009
(51) Int. Cl.: B62K 21/26, B25G 1/10

(54) **Ergonomic handgrip for bicycle handlebars**
Ergonomischer Handgriff für Fahrradlenker
Poignée ergonomique pour guidons de bicyclettes

(30) Priority: 15.05.2008 IT MI20080885
(43) Date of publication of application: 18.11.2009
(73) Proprietor: SELLE ITALIA S.r.l., 31010 Casella D'Asolo (TREVISO) (IT)
(72) Inventor: Bigolin, Giuseppe, 31010 Casella D'Asolo (Treviso) (IT)
(74) Representative: Maroscia, Antonio

(56) References cited:
- WO-A1-2008/081306
- DE-U1-202005 013 698
- GB-A- 189 717 166
- US-A- 4 308 762
- US-A1- 2008 110 291

## Description

### BACKGROUND OF THE INVENTION

The present invention relates to an ergonomic handgrip, which has been specifically designed to be fitted to bicycle and the like handlebars.

As is known, to the end portions of a bicycle handlebar are conventionally applied handgrips to facilitate the user hand in gripping the handlebar.

In racing bicycles, either of a road or a racetrack type, the handlebar handgrips usually comprise a fabric material or cork strip, but, in other cases they are mainly constituted by substantially cylindric elements, made of a rubber material, having desired hardness properties.

Yet further handgrips are so contoured or shaped as to provide an improved gripping thereon.

In competitive applications and, in general, in sports bicycles, the handlebar is so designed that a main part of the user weight is applied on the user hands.

In an agonistic and extended use of the bicycle, this can cause a hand weariness, since conventional handgrips do not allow a proper distribution of the user weight on the user hands.

Another problem is that of perspiration which unavoidably occurs on the hands, which continuously contact the handqrips.

It has been tried to overcome the above perspiration problem by using transpiring or sponging materials and coatings, but with poor results, due to the fact that, in each case, the handgrip is associated with a perfectly impermeable element, that is the handlebar tube.

Moreover, weariness and perspiration caused by an extended use of the bicycle handlebar, can reduce the bicycle control capability by the bicycle user.

Thus, it would be of essential importance, both from a comfort and safety standpoint, to improve existing handlebar handgrip constructions.

From WO2008/081306 a ventilated handlebar is know having a central body with an inner cavity and holes for allowing air to circulate through said handgrip. However, the central body is not provided with channels for conveying the air flow to the central cavity and to the holes.

From DE 20 2005 013698 an ergonomic handgrip is known having all the features mentioned in the preamble of claim 1. However, this known handgrip has no ventilation means for allowing air to circulate through said handrip.

### SUMMARY OF THE INVENTION

Accordingly, the aim of the present invention is to provide such a handgrip, specifically designed for bicycle handlebars, which is much more efficient than conventional handgrips from an ergonomic standpoint.

Within the scope of the above mentioned aim, a main object of the invention is to provide such a handgrip suitable to reduce weariness of the user hands in an extended use of the bicycle.

Another object of the present invention is to provide such a handgrip allowing an optimun transpiration, thereby reducing negative effects of perspiration.

Yet another object of the present invention is to provide such a handgrip construction which, owing to its specifically designed constructional features, is very reliable and safe in operation.

Yet another object of the present invention is to provide such a handgrip construction which can be easily made starting from easily available elements and materials and which, moreover, is very competitive from a mere economic standpoint.

According to one aspect of the present invention, the above mentioned aim and objects, as well as yet other objects, which will become more apparent hereinafter, are achieved by an ergonomic handgrip, particularly for bicycle handlebars, in accordance with the attached claim 1 and its dependent claims.

### BRIEF DESCRIPTION OF THE DRAWINGS

Further characteristics and advantages of the present invention will become more apparent hereinafter from the following detailed disclosure of a preferred, though not exclusive, embodiment of the invention, which is illustrated, by way of an indicative, but not limitative, example in the accompanying drawings, where:

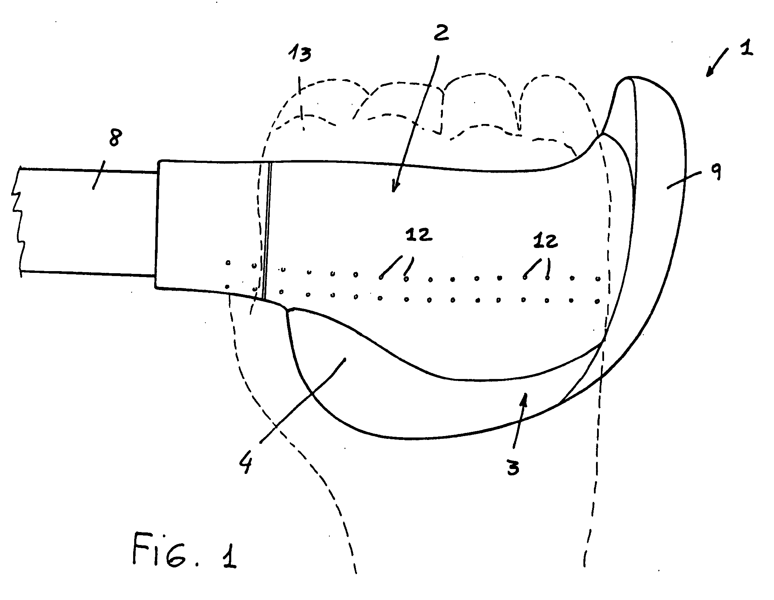

Figure 1 is a top plan view of the handgrip according to the present invention;

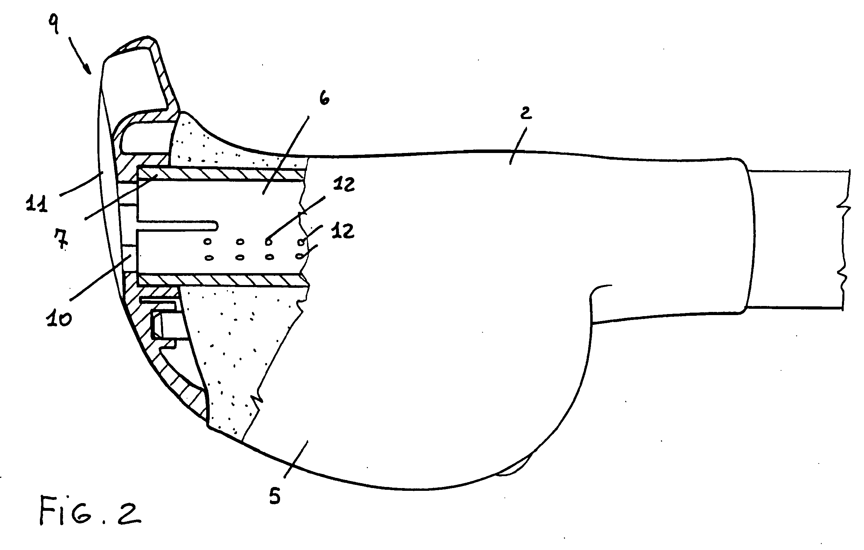

Figure 2 is a bottom view, as partially cross-sectioned, of the inventive handgrip;

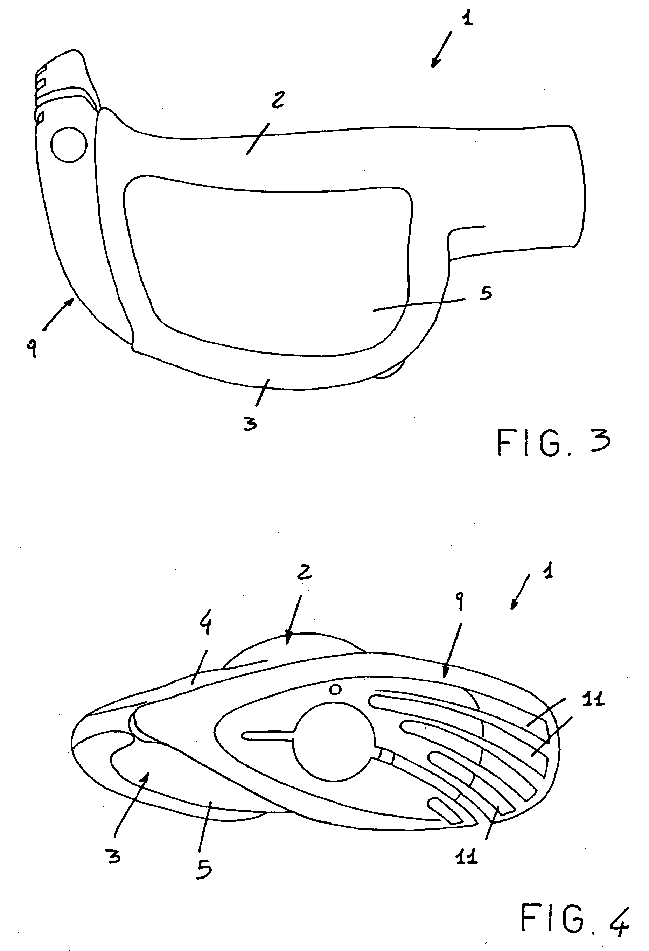

Figure 3 is yet another bottom view of the handgrip according to the present invention;
Figure 4 is an outer side view of that same inventive handgrip;

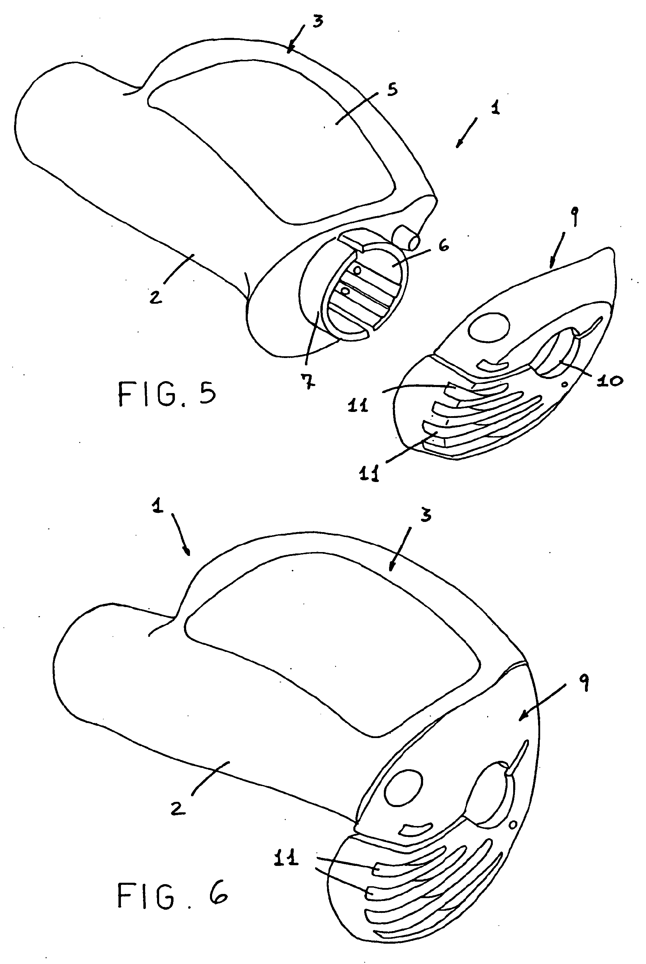

Figure 5 is a bottom perspective view, as partially exploded, of the handgrip; and
Figure 6 is yet another bottom perspective view of the handgrip according to the invention.

### DESCRIPTION OF THE PREFERRED EMBODIMENTS

With reference to the number references of the above mentioned figures, the handgrip according to the present invention, which has been generally indicated by the reference number 1, comprises a handgrip central body 2, joining with a contoured or shaped portion 3 extending, starting from said central body, to the rear of the handgrip, with reference to the bicycle advancing direction.

In the figures a right handgrip has been shown.

More specifically, said contoured portion 3 defines a top bearing surface 4, thereon a hand of the user can bear, and a bottom bearing surface 5, forming a gripping means for the user hand fingers.

The central body 2 comprises a cavity 6 defined by a tubular element longitudinally extending within the central body and ending with a collar 7 at the outer end portion of the handgrip, that is at the handgrip end opposite to that associated with the handlebar 8.

The collar 7 provides an engagement means for an end contoured element 9 which, in an assembled condition of the handgrip, is coupled to the central body 2 and the contoured portion 3.

The contoured end element 9 comprises an opening 10, coupled to a plurality of air conveying channels 11, adapted to convey an air flow toward said opening 10.

Said opening 10 communicates moreover with the handgrip cavity 6, which comprises a plurality of a aerating holes 12, through the top part of the central body 2.

Thus, the air flow, generated by the movement of the bicycle, will be conveyed, through the channels 11 and opening 10, to the cavity 6 in the central body 2, and will exit the aerating holes 12, thereby refrigerating the user hand 13.

It has been found that the invention fully achieves the intended aim and objects.

In fact, an ergonomic handgrip adapted to greatly reduce the hand weariness and negative effect of perspiration has been provided.

The handgrip according to the present invention is moreover advantageous from the standpoint of improving the bicycle control, thereby allowing an improved gripping on the bicycle handlebar, and reducing weariness and perspiration.

In practicing the invention, the used materials, as well as the contingent size and shapes, can be any, according to requirements.

## Claims

1. An ergonomic handgrip (1) for bicycle handlebars (8), comprising a handgrip central body (2) joined to a handgrip contoured portion (3) extending, starting from said central body, toward a rear of the handgrip, with reference to a bicycle advancing direction, said contoured portion (3) defining a top bearing surface (4), for bearing thereon a user hand, and a bottom surface (5) defining a user hand finger gripping means, **characterized in that** said handgrip further has ventilating means for allowing air to circulate through said handgrip, said ventilating means comprising an end contoured element (9) which, in an assembled condition of the handgrip, is coupled to said central body (2) and to said contoured portion (3), said contoured end element (9) having at least one air inlet opening (10) coupled to a plurality of air conveying channels (11) adapted to convey an air flow toward said inlet opening (10), said central body (2) having a central cavity (6) which communicates with said air inlet opening (10) and with a plurality of aerating holes (12) to allow the air flow to diffuse through the user hand.

2. An ergonomic handgrip, according to claim 1, **characterized in that** said plurality of aerating holes (12) is formed on the top outer surface (4) of said contoured portion (3) where a user hand bears.

3. An ergonomic handgrip, according to claim 1, **characterized in that** said central body cavity (6) is defined by a tubular element longitudinally extending within said central body (2).

4. An ergonomic handgrip, according to claim 1, **characterized in that** said tubular element ends with a collar (7) at an outer end portion of the handgrip (8) or at an end portion of said handgrip opposite to that associated with the bicycle handlebar (8).

5. An ergonomic handgrip, according to claim 4, **characterized in that** said collar (7) provides an engagement means for coupling said end contoured element (9) to said central body (2)..

6. An ergonomic handgrip, according to claim 1, **characterized in that** said channels (11) formed in said end contoured element (9) are so shaped and directed to convey the air flow generated by the movement of the bicycle through said opening (10) to said central cavity (6) and exit said aerating holes (12) so as to refrigerate the user hand.

## Patentansprüche

1. Ergonomischer Handgriff (1) für Fahrradlenker (8), der einen mittleren Körper (2) des Handgriffs aufweist, der mit einem konturierten Teil (3) des Handgriffs verbunden ist, welcher sich beginnend von dem mittleren Körper zu einem Hinterteil des Handgriffs bezüglich einer Fahrtrichtung des Fahrrades erstreckt, wobei der konturierte Teil (3) eine obere Auflagefläche (4) zum Auflegen einer Hand eines Anwenders darauf definiert, und eine Unterseite (5), die Greifmittel für die Finger einer Hand des Anwenders definiert, **dadurch gekennzeichnet, dass** der Handgriff weiter Belüftungsmittel besitzt, um zu gestatten, dass Luft durch den Handgriff zirkuliert, wobei die Belüftungsmittel ein konturiertes Endelement (9) aufweisen, welches in einem zusammengebauten Zustand des Handgriffes mit dem mittleren Körper (2) und mit dem konturierten Teil (3) gekoppelt ist, wobei das konturierte Endelement (9) zumindest eine Lufteinlassöffnung (10) aufweist, die mit einer Vielzahl von Luftleitungskanälen (11) gekoppelt ist, die geeignet sind, um einen Luftfluss zu der Einlassöffnung (10) hin zu fördern, wobei der mittlere Körper (2) einen mittleren Hohlraum (6) besitzt, der mit der Lufteinlassöffnung (10) und mit einer Vielzahl von Belüftungslöchern (12) in Verbindung steht, um zu gestatten, dass der Luftfluss über die Hand des Anwenders verteilt wird.

2. Ergonomischer Handgriff nach Anspruch 1, **dadurch gekennzeichnet, dass** die Vielzahl von Belüftungslöchern (12) an der oberen Außenfläche (4) des konturierten Teils (3) geformt ist, wo die Hand des Anwenders aufliegt.

3. Ergonomischer Handgriff nach Anspruch 1, **dadurch gekennzeichnet, dass** der Hohlraum (6) des mittleren Körpers durch ein rohrförmiges Element definiert ist, welches sich in Längsrichtung in dem mittleren Körper (2) erstreckt.

4. Ergonomischer Handgriff nach Anspruch 1, **dadurch gekennzeichnet, dass** das rohrförmige Element mit einem Bund (7) an einem äußeren Endteil des Handgriffes (8) oder an einem Endteil des Handgriffes entgegengesetzt zu jenem, welches mit dem Fahrradlenker (8) assoziiert ist, endet.

5. Ergonomischer Handgriff nach Anspruch 4, **dadurch gekennzeichnet, dass** der Bund (7) Eingriffsmittel aufweist, um das konturierte Endelement (9) mit dem mittleren Körper (2) zu koppeln.

6. Ergonomischer Handgriff nach Anspruch 1, **dadurch gekennzeichnet, dass** die Kanäle (11), die in dem konturierten Endelement (9) geformt sind, so geformt und ausgerichtet sind, dass sie den Luftfluss, der durch die Bewegung des Fahrrades erzeugt wird, durch die Öffnung (10) zum mittleren Hohlraum (6) leiten und so dass dieser an den Belüftungslöchern (12) austritt, um die Hand des Anwenders zu kühlen.

## Revendications

1. Poignée ergonomique (1) pour guidon de vélo (8), comprenant un corps central de poignée (2) réuni à une partie profilée de poignée (3) s'étendant, à partir dudit corps central, vers l'arrière de la poignée, par référence à une direction d'avance du vélo, ladite partie profilée (3) définissant une surface d'appui supérieure (4), pour l'appui de la main d'un utilisateur, et une surface inférieure (5) définissant un moyen de préhension par les doigts de la main de l'utilisateur, **caractérisée en ce que** ladite poignée dispose en outre de moyens de ventilation pour permettre à l'air de circuler à travers ladite poignée, lesdits moyens de ventilation comprenant un élément profilé d'extrémité (9) qui, dans un état assemblé de la poignée, est couplé audit corps central (2) et à ladite partie profilée (3), ledit élément d'extrémité profilé (9) ayant au moins une ouverture d'entrée d'air (10) couplée à une pluralité de canaux de transport d'air (11) adaptés pour transporter un flux d'air en direction de ladite ouverture d'entrée (10), ledit corps central (2) ayant une cavité centrale (6) qui communique avec ladite ouverture d'entrée d'air (10) et avec une pluralité de trous d'aération (12) pour permettre au flux d'air de se diffuser à travers la main de l'utilisation.

2. Poignée ergonomique selon la revendication 1, **caractérisée en ce que** ladite pluralité de trous d'aération (12) est formée sur la surface extérieure supérieure (4) de ladite partie profilée (3) sur laquelle un utilisateur appuie sa main.

3. Poignée ergonomique selon la revendication 1, **caractérisée en ce que** ladite cavité de corps centrale (6) est définie par un élément tubulaire s'étendant longitudinalement à l'intérieur dudit corps central (2).

4. Poignée ergonomique selon la revendication 1, **caractérisée en ce que** ledit élément tubulaire se termine par une collerette (7) au niveau d'une partie d'extrémité extérieure de la poignée (8) ou au niveau d'une partie d'extrémité de ladite poignée opposée à celle qui est associée au guidon de vélo (8).

5. Poignée ergonomique selon la revendication 4, **caractérisée en ce que** ladite collerette (7) constitue un moyen d'engagement pour le couplage dudit élément profilé d'extrémité (9) audit corps central (2).

6. Poignée ergonomique selon la revendication 1, **caractérisée en ce que** lesdits canaux (11) formés dans ledit élément profilé d'extrémité (9) ont des formes et des directions propres à transporter le flux d'air généré par le déplacement du vélo à travers ladite ouverture (10) jusqu'à ladite cavité centrale (6), pour le faire sortir par lesdits trous d'aération (12) afin de refroidir la main de l'utilisateur.
